Europäisches Patentamt

European Patent Office

Office européen des brevets

(11) Veröffentlichungsnummer: **0 497 261 A2**

# EUROPÄISCHE PATENTANMELDUNG

(21) Anmeldenummer: **92101319.9**

(51) Int. Cl.⁵: **G01H 3/00**

(22) Anmeldetag: **28.01.92**

(30) Priorität: **29.01.91 DE 4102551**

(43) Veröffentlichungstag der Anmeldung:
**05.08.92 Patentblatt 92/32**

(84) Benannte Vertragsstaaten:
**AT BE DK ES FR GB IT NL**

(71) Anmelder: **Richard Wolf GmbH**
**Pforzheimer Strasse 32**
**W-7134 Knittlingen(DE)**

(72) Erfinder: **Riedlinger, Rainer, Dr.-Ing.**
**Bernhardstrasse 7**
**W-7500 Karlsruhe 1(DE)**
Erfinder: **Zanger, Ulf, Dipl.-Ing.**
**Weingartenstrasse 91**
**W-7520 Bruchsal(DE)**

(74) Vertreter: **Vollmann, Heiko, Dipl.-Ing. et al**
**Patentanwälte Wilcken & Wilcken,**
**Musterbahn 1**
**W-2400 Lübeck 1(DE)**

(54) **Verfahren zum Bestimmen der akustischen Leistung fokussierender elektroakustischer Wandler und Vorrichtung zur Durchführung des Verfahrens.**

(57) Um eine optimale und effiziente Anwendung der Stoßwellen und Hochleistungs-Schallpulse gewährleisten zu können, ist die vom Stoßwellenwandler (2) abgestrahlte akustische Leistung und der hierdurch bedingte Schalldruck im Fokus (3) zu kontrollieren bzw. zu regeln. Dazu werden die von dem Wandler (2) abgestrahlte Schallwellen (6) mindestens teilweise in Richtung auf den Wandler (2) umgelenkt, wobei die von den reflektierten Schallwellen am Wandler (2) induzierte elektrische Spannung als Maß für die abgestrahlte akustische Leitung dient.

Fig 1

Die Erfindung betrifft ein Verfahren zum Bestimmen der akustischen Leistung fokussierender elektroakustischer Wandler, insbesondere von für die Medizintechnik bestimmten Wandlern zur Behandlung von körperinneren Objekten. Weiterhin betrifft die Erfindung eine Vorrichtung, die insbesondere zur Durchführung des erfindungsgemäßen Verfahrens bestimmt und geeignet ist.

Ein fokussierender elektroakustischer Wandler der eingangs erwähnten Art ist beispielsweise aus der DE-OS 37 32 131 bekannt. Dieser Wandler weist eine konkave Kugelkalotte auf, auf deren Kalottenfläche piezoelektrische Wandlerelemente angeordnet sind, die elektrisch zum Schwingen anregbar sind und ist mit seinem auf der Wandlerachse liegenden Fokus auf das jeweilige Objekt ausrichtbar, wobei die erzeugten Schallimpulse über ein Koppelmedium in den Körper des Patienten übertragbar sind.

Um eine optimale und effiziente Anwendung der Stoßwellen und Hochleistungsschallpulse gewährleisten zu können, müssen die akustischen Parameter eines Stoßwellenerzeugers über lange Zeiträume konstant gehalten werden. Dies gilt besonders für die vom Stoßwellenwandler abgestrahlte akustische Leistung und den hierdurch bedingten Schalldruck im Fokus. Es ist daher nötig, entsprechende Messungen des Schalldruckes vorzunehmen, um durch geeignete Maßnahmen die akustische Leistung des Stoßwellenerzeugers konstant halten zu können. Hierzu werden üblicherweise separate akustische Meßempfänger (Hydrophone) eingesetzt, mit denen der Schalldruck im und außerhalb des Fokus gemessen wird.

Diesem Vorgehen haften jedoch die Nachteile an, daß bei Messungen des Schalldrucks im Fokus eine sehr genaue Positionierung des Hydrophons erfolgen muß, daß das Hydrophon durch Einwirkung von Druckpulsen hoher Amplitude in kurzer Zeit unbrauchbar ist, und daß eine ständige Nachkalibrierung erfolgen muß. Messungen des Schalldruckes außerhalb des Fokus mittels eines punktförmigen Hydrophons sind nur bedingt aussagefähig, da ja nicht der gesamte abgestrahlte Schall erfaßt wird. Auch hier ist eine ständige Nachkalibrierung erforderlich.

Eine weitere Vorgehensweise bei der Überprüfung von Geräten zur extrakorporalen Stoßwellenbehandlung, insbesondere zur Steinzertrümmerung, besteht darin, ein Target in den therapeutischen Fokus zu bringen und mittels Stoßwellen dieses Target bis zu einer vorgewählten Größe zu zertrümmern. Bei Beachtung der Anzahl der nötigen Stoßwellen und deren jeweiliger Energie bis zum Erreichen des gewünschten Zertrümmerungsgrades ergibt sich ein Maß für die Zertrümmerungswirkung des jeweiligen Gerätes. Die Ausgestaltung eines Targets für dieses Verfahren kann man beispielsweise der EP-OS 0 336 085 entnehmen. Die wesentlichen Nachteile bei dieser Methode zur Überprüfung der Zertrümmerungswirkung an Modellen von Steinen besteht darin, daß dieses Verfahren schlecht reproduzierbar und außerdem sehr zeitaufwendig ist.

Der vorliegenden Erfindung liegt daher die Aufgabe zugrunde, ein Verfahren zum Bestimmen der akustischen Leistung fokussierender elektroakustischer Wandler zu schaffen, das einerseits schnell, einfach und ohne größeren gerätetechnischen Aufwand durchzuführen ist und andererseits möglichst exakte Meßergebnisse liefert. Weiterhin soll eine Vorrichtung zur Durchführung eines solchen Verfahrens geschaffen werden.

Der verfahrensmäßige Teil dieser Aufgabe wird dadurch gelöst, daß die vom Wandler abgestrahlten Schallwellen mindestens teilweise in Richtung auf den Wandler umgelenkt werden, wobei das hierdurch im Wandler induzierte elektrische Signal als Maß für die abgestrahlte akustische Leistung dient. Elektrische Größen können bekanntermaßen sehr genau ermittelt werden, so daß mit diesem Verfahren recht genaue Messungen erfolgen können. Im übrigen ist der gerätetechnische Aufwand denkbar gering, da die elektrische Messung in der Leitung des Stoßwellenerzeugers zwischen Generator und Wandler erfolgen kann.

Vorteilhafte Ausgestaltungen des erfindungsgemäßen Verfahrens sind durch die in den Unteransprüchen 2 bis 6 aufgeführten Merkmale gekennzeichnet.

So ist es zum Erhalt reproduzierbarer Meßergebnisse zweckmäßig, zur Umlenkung der Schallwellen in Richtung auf den Wandler einen Reflektionskörper vorzusehen und diesen dann an definierter Stelle zwischen Wandler und Wandlerfokus anzuordnen. Die definierte Stelle ist zweckmäßigerweise so zu wählen, daß die vom Wandler erzeugten Schallwellen auf dem Reflektionskörper auftreffen, bevor sich diese aufsteilen.

Das im Wandler induzierte elektrische Signal dient als Maß für die abgestrahlte akustische Leistung. Zur Bestimmung dieses Maßes kann beispielsweise die Signalleistung ermittelt werden. Meß- und gerätetechnisch besonders einfach ist es jedoch, die dann am Wandler anliegende elektrische Spannung als Maß für die Schalleistung heranzuziehen. Diese Spannung kann praktisch ohne bauliche Veränderungen am Wandler abgegriffen werden.

Vorteilhaft wird der Reflektionskörper so ausgebildet und angeordnet, daß ein möglichst hoher Anteil reflektierter Schallwellen entsteht. Hierdurch entsteht ein starkes, gut meßbares Signal am Wandler. Im übrigen ist die Messung natürlich um so genauer, je mehr Schallwellen erfaßt werden, d. h. zum Wandler reflektiert werden.

Um den Reflektionskörper an eine definierte Stelle zwischen Wandler und dessen Fokus zu bringen, gibt es zahlreiche Möglichkeiten, von denen zwei besonders vorteilhaft sind und auch in der Praxis reproduzierbare Meßergebnisse liefern. Bei einem Verfahren wird der Reflektionskörper zunächst an beliebiger Stelle auf der Wandlerachse zwischen Wandler und Fokus positioniert. Sodann wird der Reflektionskörper schrittweise verfahren, wobei nach jedem Schritt vom Wandler Schallwellen ausgesendet und das im Wandler induzierte elektrische Signal, beispielsweise die Spannung gemessen wird. Die definierte Position ist dann erreicht, wenn das elektrische Signal maximal ist. Durch diese Art der Positionierung wird nicht nur der vorrichtungsmäßige Aufwand minimiert, sondern auch zugleich das Meßverfahren optimiert, da in dieser definierten Stellung des Reflektionskörpers ein Großteil der vom Wandler ausgesandten Schallwellen auf diesen reflektiert wird.

Ein weiteres Verfahren besteht darin, daß die bei Lithotripsieeinrichtungen ohnehin vorhandene Ortungseinrichtung (Ultraschall oder Röntgen) in Verbindung mit einer Positionierhilfe zur definierten Anordnung des Reflektionskörpers genutzt wird. Der zusätzliche Vorteil dieses Positionierverfahrens liegt darin, daß hierbei gleichzeitig überprüft werden kann, ob der in der Ortungseinrichtung angezeigte Fokuspunkt mit dem tatsächlichen Fokus des Wandlers übereinstimmt.

Der vorrichtungsmäßige Teil der o. g. Aufgabe wird durch die in Anspruch 7 aufgeführten Merkmale erfüllt. Weitere vorteilhafte Ausgestaltungen der Vorrichtung sind in den Ansprüchen 8 bis 10 aufgeführt.

Eine solche Halterung zur Anordnung des Reflektionskörpers an definierter Stelle zwischen Wandler und Fokus ist in Anpassung an die Bauform des Gerätes, beispielsweise der Lithotripsieeinrichtung anzufertigen. Da insbesondere bei Wandlern in der Medizintechnik in der Regel zahlreiche Verstellmöglichkeiten des Wandlers innerhalb der Einrichtung bzw. der Einrichtung in bezug auf den Wandler gegeben sind, reicht hier in der Regel eine einfache Konstruktion der Halterung aus, die den Reflektionskörper grob positioniert. Eine Feineinstellung kann dann in der Regel über die ohnehin geräteseitig vorhandenen Verstellmöglichkeiten erfolgen.

Der Reflektionskörper wird zweckmäßigerweise so ausgebildet, daß eine möglichst hohe Schallreflektion erreicht wird. Die geometrische Oberflächenform ist zweckmäßigerweise der ausgesandten Schallfront korrespondierend auszubilden. Bei den üblichen, zum Fokus hin konkaven Wandlern wird also ein zum Wandler hin kalottenförmig ausgebildeter Reflektionskörper Anwendung finden.

Die Erfindung wird nachstehend anhand einiger in den Zeichnungen dargestellter Ausführungsbeispiele näher erläutert. Es zeigen:

Figur 1     eine Anordnung der erfindungsgemäßen Vorrichtung in einem elektroakustischen Wandler in schematischer Darstellung,

Figur 2     die erfindungsgemäße Vorrichtung in einem Stoßwellenlithotriptor in Meßposition,

Figur 3a     den erfindungsgemäßen Reflektor in Justierstellung,

Figur 3b     die Vorrichtung nach Figur 3a in Meßstellung,

Figur 4a     eine Ausgestaltung des erfindungsgemäßen Reflektors in Justierstellung,

Figur 4b     die Vorrichtung nach Figur 4a in Meßstellung,

Figur 5a     eine weitere Ausgestaltung des erfindungsgemäßen Reflektors in Justierstellung,

Figur 5b     die Vorrichtung nach Figur 5a in Meßstellung,

Figur 6     eine weitere Ausgestaltung des erfindungsgemäßen Reflektors in Justierstellung und

Figur 7     eine Draufsicht auf die Positionierhilfe der Vorrichtung nach Figur 6 in vergrößerter Darstellung

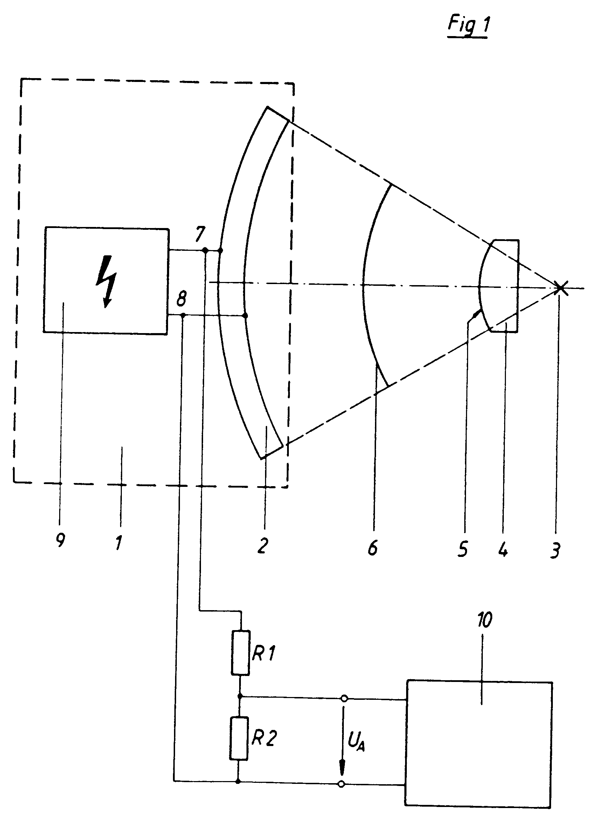

Die Vorrichtung nach der Erfindung besteht gemäß Figur 1 im wesentlichen aus einem Stoßwellenerzeuger 1 mit einem elektroakustischen Wandler 2, der durch elektrische Anregung Schallimpulse auszusenden in der Lage ist, die in einem Fokus 3 gebündelt werden Zwischen dem Fokus 3 und dem Wandler 2 ist ein Reflektionskörper 4 positionierbar, welcher vorzugsweise aus einem schallharten Material nicht zu hoher Dichte, z. B. Aluminium, besteht.

Zum Messen der akustischen Leistung des elektroakustischen Wandlers 2 wird der Reflektionskörper 4 zwischen Wandler 2 und Fokus 3 so positioniert, daß seine Symmetrieachse mit der des Wandlers 2 zusammenfällt und seine reflektierende Oberfläche 5 dem Wandler 2 zugewandt ist. Diese Oberfläche 5 befindet sich in einem Bereich des Schallfeldes, in welchem der Effekt der Aufsteilung der Wellen noch nicht wesentlich ausgeprägt ist. Die Positionierung in dem vorstehend beschriebenen Bereich ist u. a. deshalb nötig, damit ein möglichst großer Anteil des Schalls zum Wandler 2 zurückgeworfen wird, was im Bereich wesentlicher Aufsteilung nicht mehr der Fall wäre. Deshalb wird auch die reflektierende Oberfläche 5 des Reflektionskörpers 4 vorteilhafterweise größer oder zumindest gleich der Frontfläche der in dem genannten Bereich auf die Oberfläche 5 des Reflektionskörpers 4 auftreffenden Schallwelle 6 gewählt. Die dem Wandler 2 zugewandte Oberfläche 5 weist zweckmäßigerweise eine Form auf, die mit der Geometrie der vom Wandler 2 in Richtung des Fokus 3 einfallenden Schallwelle 6 korrespondiert. Die Beispiele der Zeichnungen zeigen als Form für den Reflektionskörper 4 einen Kugelabschnitt. Es sind jedoch auch andere Formen denkbar, z. B. eine Kreisfläche.

Der durch den Reflektionskörper 4 zum Wandler 2 zurückgeworfene Schall erzeugt bei seinem Auftreffen auf den Wandler 2 an dessen Anschlußklemmen 7 und 8 eine elektrische Spannung. Diese Spannung wird, da der Wandler 2 von einem elektrischen Generator 9 mit hoher Spannung versorgt wird, vorzugsweise über einen Spannungsteiler R1, R2 abgegriffen und auf einem Meß- und Anzeigegerät 10, z. B. einem Oszilloskop, zur Anzeige gebracht. Der Spannungsteiler sollte vorteilhafterweise mit einer an sich bekannten und daher nicht dargestellten Schutzbeschaltung ausgestattet sein, welche den Wert seiner Ausgangsspannung im Sendebetrieb begrenzt.

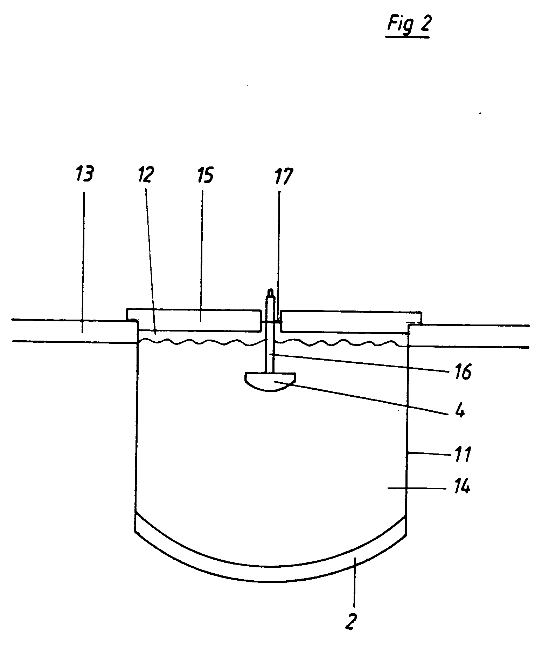

In Figur 2 ist die Anwendung der erfindungsgemäßen Vorrichtung in einem Lithotriptor gezeigt. Der Wandler 2 bildet dabei den Bodenteil eines Behältnisses 11, welches die Aussparung 12 in einer Patientenliege 13 topfartig nach unten ausstülpt. Das Behältnis 11 ist mit einem Koppelmedium 14 füllbar. In die Aussparung 12 ist eine den Reflektionskörper 4 tragende Halterung 15 einsetzbar. Der Reflektor 4 ist an einer Stange 16 angeordnet, die um eine an der Halterung 15 befestigte Achse 17 schwenkbar gelagert ist. Die Halterung 15 und die Stange 16 sind dabei so bemessen, daß der Reflektionskörper 4, wenn er sich in Meßstellung befindet, in das Koppelmedium 14 eintaucht und zwar in den oben beschriebenen Bereich zwischen Fokus 3 und elektroakustischem Wandler 2.

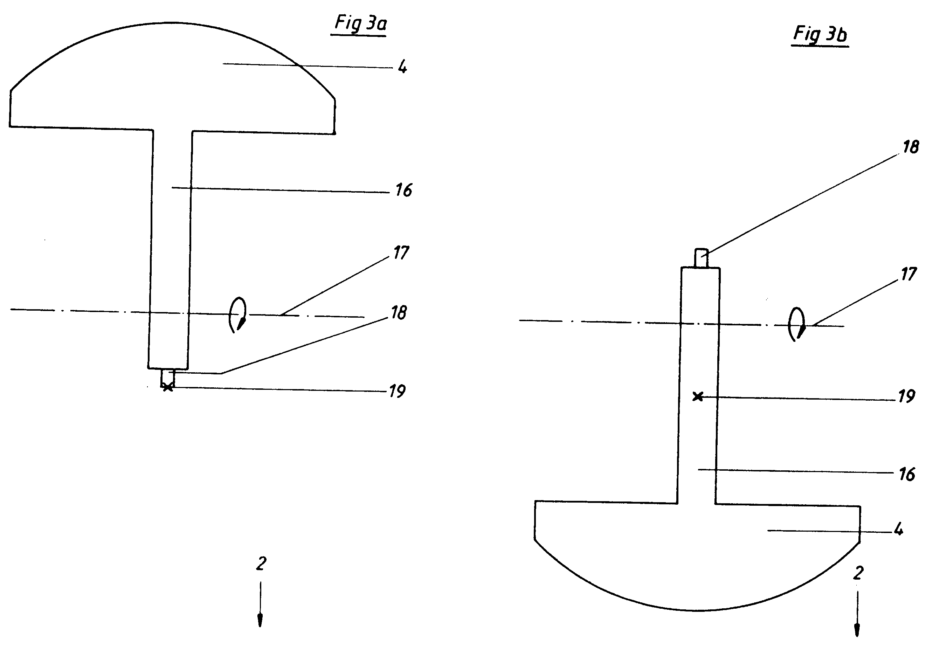

Figuren 3a und 3b zeigen die Möglichkeit, gleichzeitig die Übereinstimmung zwischen Stoßwellenfokus und Zielgebiet der nicht dargestellten Ortungseinrichtung zu überprüfen. Wie den Darstellungen zu entnehmen ist, befindet sich an dem dem Reflektionskörper 4 abgewandten Ende der Stange 16 eine Positionierhilfe 18. Diese Positionierhilfe 18 besteht aus einem gegenüber dem Koppelmedium 14 akustisch reflektierenden oder im Röntgenbild gut darstellbaren Material oder aus einem Material, das gleichzeitig sowohl für die Darstellung durch Röntgenstrahlen, als auch durch Ultraschall geeignet ist. Natürlich erhält die Positionierhilfe eine Gestalt, die mit der jeweiligen Ortungseinrichtung gut erkannt werden kann und dennoch eine geringe Größe aufweist, z. B. Stift, Kugel, Kreuz oder Ring.

Diese Vorrichtung ist folgendermaßen zu handhaben:
Zur Positionierung des Reflektionskörpers 4 wird dieser zunächst auf seiner Halterung 15 in die in Figur 3a gezeigte Stellung gebracht. Die reflektierende Oberfläche 5 des Reflektionskörpers 4 ist hierbei vom Wandler 2 abgewandt, während sich die Positionierhilfe 18, dem Wandler 2 zugewandt, im Bereich des Zielpunktes 19 der Ortungseinrichtung befindet. Durch Verfahren der Patientenliege 13 wird der mit der Positionierhilfe 18 verbundene Reflektionskörper 4 so positioniert, daß sich die Positionierhilfe 18 im Zielpunkt 19 der Ortungseinrichtung befindet. Bei korrekter Justage der Ortungseinrichtung fällt deren Zielpunkt 19 mit dem Stoßwellenfokus 3 zusammen.

Um zu prüfen, ob die Ortungseinrichtung richtig justiert ist, also die Fokusse von Wandler und Ortungseinrichtung zusammenfallen, wird die erfindungsgemäße Vorrichtung nach der oben beschriebenen Ausrichtung der Positionierhilfe 18 im Zielpunkt 19 der Ortungseinrichtung in eine Meßposition gebracht, wie sie z.B. in Figur 2 dargestellt ist. Der Reflektor 4 wird nach der maximalen Amplitude der im Wandler induzierten Meßspannung ausgerichtet. Hiernach wird die Vorrichtung erneut in Justierstellung gebracht und die Positionierhilfe 18 geortet, wodurch festgestellt werden kann, ob die Fokusse von Wandler und Ortungseinrichtung zusammenfallen und um welches Maß sie ggf. differieren. Entsprechend kann dann die Ortungseinrichtung nachjustiert werden.

Durch dieses Vorgehen wird sichergestellt, daß sich die Positionierhilfe 18 auch tatsächlich im Fokus 3 des Wandlers 2 befindet und damit der Reflektionskörper 4 beim anschließenden Meßbetrieb die korrekte Position zwischen Fokus 3 und Wandler 2 einnimmt. Dies könnte durch eine Positionierung anhand der Wandlergeometrie praktisch nicht gewährleistet werden. Denn im allgemeinen liegt der Stoßwellenfokus 3, der wie oben erwähnt, bei korrekter Justage der Ortungseinrichtung mit deren Zielpunkt 19 zusammenfällt, nicht unbedingt im geometrischen Fokus des elektroakustischen Wandlers. Bei den vorliegenden Zeichnungsbeispielen wäre dieser geometrische Fokus der Mittelpunkt des kugelschalenförmigen Schallsenders. Für die erfindungsgemäße Vorgehensweise wird die reflektierende Oberfläche 5 des Reflektionskörpers 4 so von der Achse 17 beabstandet, daß die Oberfläche 5 konzentrisch zum geometrischen Fokus des Wandlers 2 liegt und die Oberfläche der Positionierhilfe 18 mit dem Zielpunkt 19 der Ortungseinrichtung zusammenfällt, welche im allgemeinen auf den Stoßwellenfokus 3 justiert ist.

Nach dem Ausrichten der Positionierhilfe 18 auf den Fokus 3 des Wandlers 2 wird der Reflektionskörper 4 um die Achse 17 gedreht, so daß seine reflektierende Oberfläche 5 dem Wandler 2 gemäß Figuren 2, 3b, 4b zugewandt ist. Dies ist die Position, in der die Leistungsmessung durchgeführt werden kann. Hierzu wird der Stoßwellengenerator 1 aktiviert, d. h. der Wandler 2 wird durch pulsförmige Signale erregt und die vom Reflektionskörper 4 auf den Wandler 2 reflektierte akustische Leistung im Wandler 2 in elektrische Leistung umgewandelt und in der oben beschriebenen Weise gemessen. Das hierdurch ermittelte Meßergebnis wird auf dem Meß- und Anzeigegerät 10 zur Anzeige gebracht und kann vom Anwender abgelesen und mit einem vorgegebenen Sollwert verglichen werden. Ein solcher Soll/Ist-Wert-Vergleich kann auch durch das Meß- und Anzeigegerät 10 erfolgen, so daß dann das Meßergebnis direkt als Gut/Schlecht-Anzeige angezeigt werden kann.

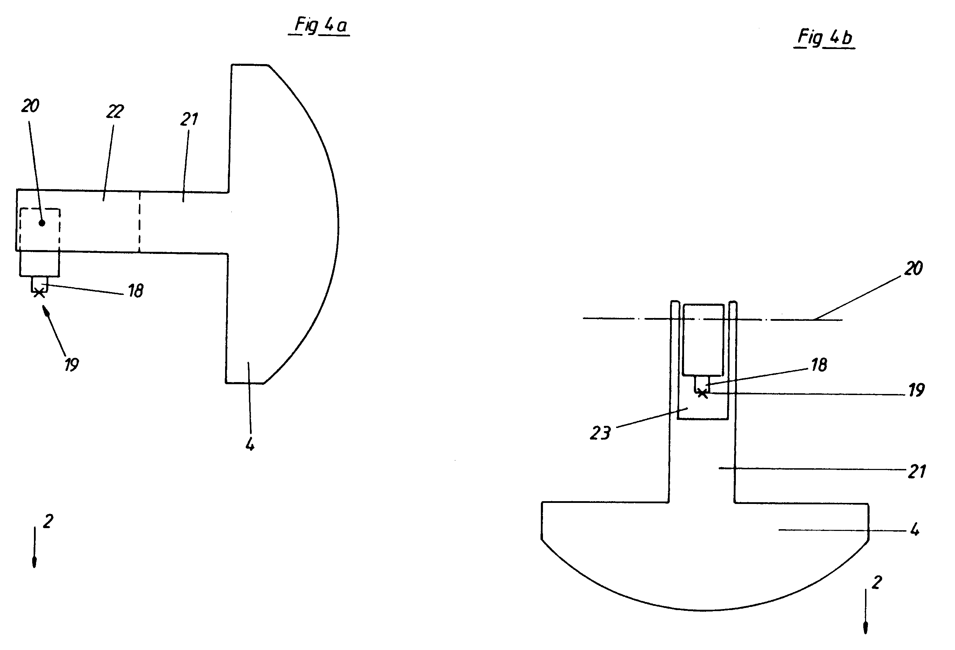

Die Figuren 4a und 4b zeigen eine weitere mögliche Ausführungsform des erfindungsgemäßen Reflektors 4 mit Positionierhilfe 18, die auch für einen mit einem Röntgenortungssystem ausgestatteten Stoßwellengenerator gut geeignet ist. Der Reflektionskörper 4 ist um eine an der Halterung 15 befindliche gemeinsame Achse 20 drehbar gelagert. Hierzu ist der Reflektor 4 mit einer Stange 21 versehen, welche in zwei zueinander parallele Schenkel 22 übergeht, die an der Achse 20 befestigt sind. Diese beiden Schenkel 22 der Stange 21 bilden einen Freiraum 23, der die zwischen den beiden Schenkeln 22 an der Achse 17 angebrachte Positionierhilfe 18 aufnehmen kann.

Beim Ausrichten der Positionierhilfe 18 auf den Zielpunkt 19 der Ortungseinrichtung befindet sich der Reflektionskörper 4 in einer Position entsprechend Figur 3a oder ist gemäß Figur 4a seitlich ausgeschwenkt. Letztere Position wird vorteilhafterweise bei mit Röntgenortungssystemen ausgestatteten Stoßwellengeneratoren gewählt, da bei einer Positionierung des z. B. aus Aluminium bestehenden Reflektionskörper 4 entsprechend Figur 3a eine Röntgenortung der Positionierhilfe 18 nicht möglich ist. Nach erfolgter Ausrichtung der Positionierhilfe 18 wird der Reflektionskörper 4 dann zum Messen wieder in die Meßstellung nach Figur 4b geschwenkt. Da bei der eben beschriebenen Anordnung von Reflektionskörper 4 und Positionierhilfe 18 die Positionierhilfe bei der Messung in der Ausrichtstellung verbleiben kann, kann jederzeit leicht nachgeprüft werden, ob der Reflektionskörper noch korrekt plaziert ist, in dem einfach der Reflektionskörper 4 aus der Meßposition geschwenkt wird und die Positionierhilfe 18 geortet wird.

Bei einer anderen Vorgehensweise nach der Erfindung kann die Positionierhilfe 18 für den Reflektionskörper 4 entfallen. Es wird dann so vorgegangen, daß der Reflektionskörper 4 in dem Bereich zwischen Fokus 3 und Wandler 2 auf letzteren ausgerichtet wird und dann in allen drei Raumkoordinaten verfahren wird bis die Meßspannung ihre maximale Amplitude erreicht.

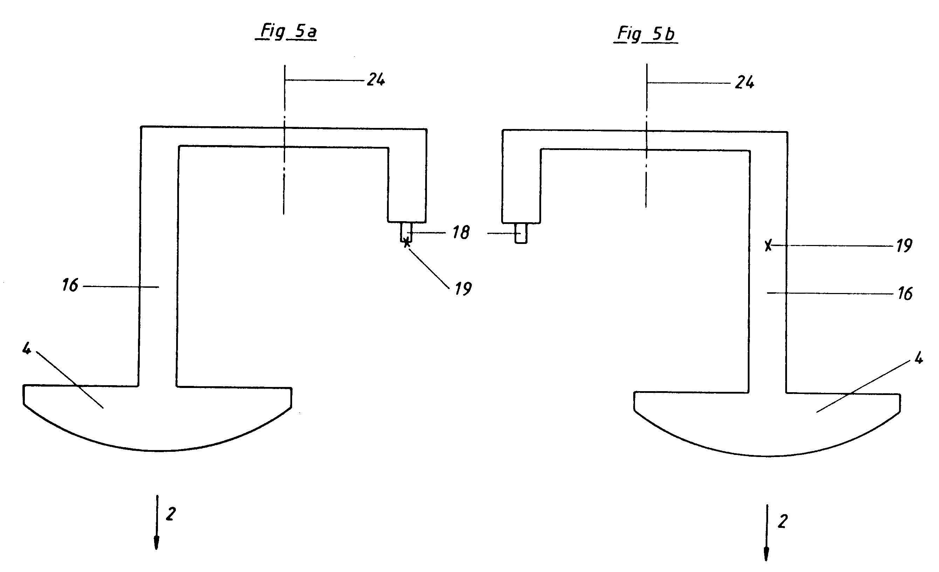

In der Ausführungsform nach den Figuren 5a und 5b wird der Träger 16 um eine, zur Symmetrieachse des Wandlers 2 parallele Achse 24 gedreht, so daß entweder die Positionierhilfe 18 in das Zielgebiet 19 der Ortungseinrichtung geschwenkt oder der Reflektor 4 in seine Meßstellung gebracht ist. Da bei der anhand der Figuren 5 dargestellten Ausführung die Positionierhilfe 18 und der Reflektor 4 an voneinander abweisenden, diametral angeordneten Enden des Trägers 16 (bezogen auf die Achse 24) liegen, ist von der einen (Figur 5a) zur anderen Stellung (Figur 5b) eine Schwenkbewegung von 180° um die Achse 24 erforderlich. Auch mit dieser Vorrichtung kann sowohl die Leistung des Wandlers 2 als auch die korrekte Justierung der Ortungseinrichtung in bezug auf den Wandler 2 festgestellt werden.

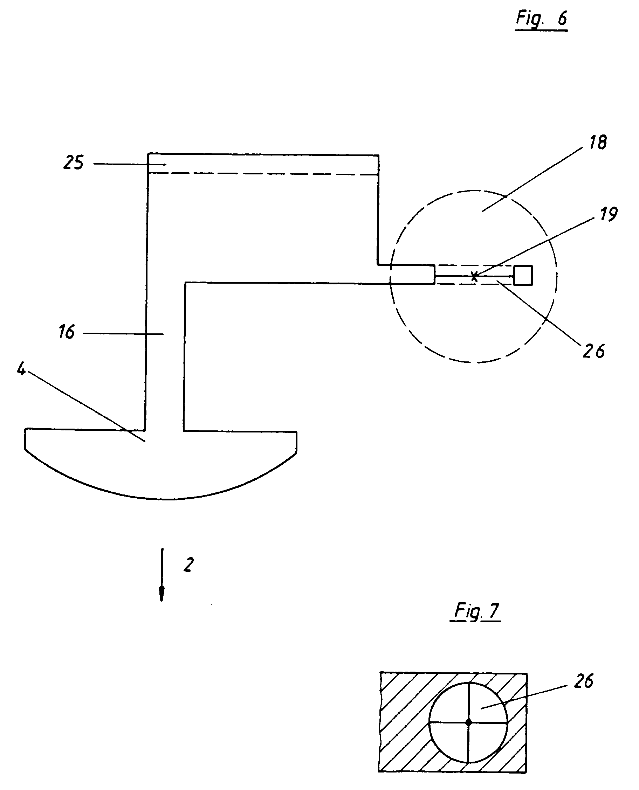

Bei der in Figur 6 dargestellten Ausführungsform ist der Träger 16 derart verschiebbar angeordnet, daß je nach Schiebestellung entweder die Positionierhilfe 18 in das Zielgebiet 19 der Ortungseinrichtung (Justierstellung) gebracht ist oder aber der Reflektor 4 in einer dem Wandler gegenüberliegenden Stellung (Meßstellung) liegt. Hierzu ist der Träger 16 mittels einer Führung 25 an der Haltevorrichtung 15 verschiebbar gelagert. Die Führung 25 kann als Schwalbenschwanzführung oder auch in anderer an sich bekannter Weise ausgebildet sein und ermöglicht eine Verschiebung des Trägers 16 an der Haltevorrichtung 15 quer zur Wandlerachse. Die in Figur 6 dargestellte Positionierhilfe 18 ist, wie anhand von Figur 7 deutlich zu erkennen ist, als Drahtkreuz mit kugelförmigem Mittelpunkt ausgebildet. Um bei der Ortung störende Reflektionen soweit wie möglich zu vermeiden, wird das Drahtkreuz aus möglichst feinen Drähten gebildet. Wegen der dann nur geringen mechanischen Stabilität ist die Positionierhilfe 18 in Kunststoff 26 vergossen, so daß hierdurch eine ausreichende mechanische Stabilität gewährleistet wird.

Die anhand der Figuren 5 und 6 dargestellten Ausführungsformen, insbesondere die nach Figur 6, sind dann besonders gut geeignet, wenn eine Abbildung sowohl mittels Röntgenstrahlung als auch mittels Ultraschall erfolgen soll.

Mit der Erfindung wird eine wesentlich genauere und aussagekräftigere Messung als bei einer Messung mittels eines Hydrophons erzielt. Denn setzt der Wandler 2 im Sendebetrieb weniger oder mehr elektrische Leistung in akustische um, so gilt das gleiche für die Umwandlung von akustischer in elektrische Leistung im Empfangsbetrieb. Abweichungen in der vom Stoßwellenerzeuger abgestrahlten akustischen Leistung vom Sollwert werden deutlicher und damit besser detektierbar und Meßungenauigkeiten verringert.

Das Verfahren und die Vorrichtung nach der Erfindung sind nicht nur auf Wandler zur Erzeugung von Hochleistungspulsen und Stoßwellen und auf den therapeutischen Bereich beschränkt, sondern auch bei anderen elektroakustischen Wandlern mit hoher Schallpulsleistung, z. B. Wandler für die Materialprüfung, vorteilhaft anwendbar. Die Wandler müssen lediglich durch pulsförmige Signale erregt werden, da z. B. bei Dauerschall kein exaktes Meßergebnis erzielt werden kann.

**Patentansprüche**

1. Verfahren zum Bestimmen der akustischen Leistung fokussierender elektroakustischer Wandler, insbesondere von für die Medizintechnik bestimmten Wandlern zur Behandlung von körperinneren Objekten, dadurch gekennzeichnet, daß die von dem Wandler (2) abgestrahlten Schallwellen mindestens teilweise in Richtung auf den Wandler (2) umgelenkt werden, wobei das hierdurch im Wandler (2) induzierte elektrische Signal ein Maß für die abgestrahlte akustische Leistung ist.

2. Verfahren nach Anspruch 1, dadurch gekennzeichnet, daß zur Umlenkung der Schallwellen auf den Wandler (2) ein Reflektionskörper (4) an definierter Stelle zwischen Wandler (2) und Wandlerfokus (3) angeordnet wird.

3. Verfahren nach Anspruch 1 oder 2, dadurch gekennzeichnet, daß die im Wandler (2) durch die reflektierten Schallwellen induzierte elektrische Spannung als Maß für die abgestrahlte akustische Leistung verwendet wird.

4. Verfahren nach einem der vorhergehenden Ansprüche, dadurch gekennzeichnet, daß der Reflektionskörper (4) so ausgebildet und angeordnet wird, daß der Anteil der zum Wandler (2) reflektierten Schallwellen möglichst hoch ist.

5. Verfahren nach einem der vorhergehenden Ansprüche, dadurch gekennzeichnet, daß der Reflektionskörper (4) im Bereich zwischen Wandler (2) und Fokus (3) verfahren wird, bis das im Wandler (2) induzierte elektrische Signal den Maximalwert erreicht hat.

6. Verfahren nach einem der vorhergehenden Ansprüche, dadurch gekennzeichnet, daß dem Reflektionskörper (4) eine Positionierhilfe (18) zugeordnet ist, die mittels der dem Wandler zugeordneten Ortungseinrichtung erfaßbar und über eine Positioniereinrichtung zusammen mit dem Reflektionskörper (4) in bezug auf den Wandler (2) lageveränderbar ist, wobei der Reflektionskörper (4) mittels der Positionierhilfe (18) an seine definierte Stelle in bezug auf den Wandler (2) gebracht wird.

7. Vorrichtung, insbesondere zur Durchführung des Verfahrens nach einem der vorhergehenden Ansprüche, gekennzeichnet durch einen Reflektionskörper (4) und eine Halterung (15) zur Anordnung des Reflektionskörpers (4) zwischen einem fokussierenden elektroakustischen Wandler (2) und dessen Fokus (3).

8. Vorrichtung nach Anspruch 7, dadurch gekennzeichnet, daß der Reflektionskörper (4) eine zum Wandler (2) hin konvexe Reflektionsfläche (5) aufweist, die mit der Geomentrie der vom Wandler (2) ausgesandten Schallfront korrespondiert.

9. Vorrichtung nach einem der vorhergehenden Ansprüche, bei der dem Wandler eine Objektortungseinrichtung zugeordnet ist, dadurch gekennzeichnet, daß dem Reflektionskörper (4) eine von der Ortungseinrichtung erfaßbare Positionierhilfe (18) zugeordnet ist, mit dessen Hilfe der Reflektionskörper (4) in seine definierte Stelle zwischen Wandler (2) und Fokus (3) bringbar ist.

10. Vorrichtung nach einem der vorhergehenden Ansprüche, dadurch gekennzeichnet, daß Reflektionskörper (4) und Positionierhilfe (18) an einem gemeinsamen Träger (16) angeordnet sind, der um eine Achse (17) schwenkbar innerhalb der Halterung (15) sitzt.

11. Vorrichtung nach einem der vorhergehenden Ansprüche, dadurch gekennzeichnet, daß Positionierhilfe (18) und Reflektionskörper (4) so am Träger (16) angeordnet sind, daß die Positionierhilfe (18) im Fokus des Wandlers angeordnet ist, wenn der Reflektionskörper (4) in einer zu seiner definierten Lage um die Achse (17) der Halterung (15) um 180° geschwenkten Position ist.

12. Vorrichtung nach einem der vorhergehenden Ansprüche, dadurch gekennzeichnet, daß der Reflektionskörper (4) und die Positionierhilfe (18) an einem gemeinsamen Träger (16) angeordnet sind, der mittels einer Führung (25) an der Halterung (15) verschiebbar gelagert ist.

13. Verfahren zum Justieren einer Ortungseinrichtung in bezug auf einen fokussierenden elektroakustischen Wandler (2), insbesondere unter Einsatz einer Vorrichtung nach einem der Ansprüche 9 bis 11, bei dem zunächst eine Positionierhilfe (18) in Übereinstimmung mit dem Zielpunkt (19) der Ortungseinrichtung gebracht wird, bei dem dann ein mit der Positionierhilfe (18) verbundener Reflektionskörper (4) in eine durch die Anordnung der Positionierhilfe (18) in bezug auf den Wandler festgelegte Lage (Meßstellung) gebracht wird, wonach mittels des Reflektionskörpers (4) durch Beschallung und nachfolgende Messung die Lage des Fokus des Wandlers (2) bestimmt und Abweichungen zwischen dem Zielpunkt (19) der Ortungseinrichtung und dem Fokus anhand der Lageveränderung des Reflektionskörpers (4) bestimmt und korrigiert werden.

_Fig 1_

_Fig 2_

Fig 3b

Fig 3a

Fig 4b

Fig 4a

Fig 5a

Fig 5b

Fig. 6

Fig. 7